# EUROPÄISCHE PATENTSCHRIFT

(11) **EP 0 554 772 B1**
(45) Veröffentlichungstag und Bekanntmachung des Hinweises auf die Patenterteilung: **17.09.1997**
(21) Anmeldenummer: 93101182.9
(22) Anmeldetag: 27.01.1993
(51) Int. Cl.: B23B 41/16, B23B 29/03

(54) **Feinbohrwerkzeug**
Fine boring tool
Outil à pointer

(30) Priorität: 27.01.1992 DE 4202149
(43) Veröffentlichungstag der Anmeldung: 11.08.1993
(73) Patentinhaber: Walter Kieninger GmbH Hartmetall- und Diamantwerkzeugfabrik, D-77933 Lahr (DE)
(72) Erfinder: Horsch, Wilfried, W-6951 Obrigham (DE); Kieninger, Walter, W-7630 Lahr (DE)
(74) Vertreter: Grünecker, Kinkeldey, Stockmair & Schwanhäusser Anwaltssozietät

(56) Entgegenhaltungen:
- DE-A- 1 652 790
- DE-A- 2 804 698
- DE-B- 2 238 061
- US-A- 4 043 695

## Beschreibung

Die vorliegende Erfindung bezieht sich auf ein Bohrungsbearbeitungswerkzeug mit einem Aufnahmeabschnitt, einer Schneidenhalterung zur Aufnahme einer Schneide, die in dem, dem Aufnahmeabschnitt gegenüberliegenden Endbereich des Werkzeug angeordnet ist, wobei die Schneide mittels einer Betätigungseinrichtung in radialer Richtung bewegbar ist, und die Betätigungseinrichtung mittels einer Verstelleinrichtung einstellbar ist, sowie einer axial in dem Werkzeug bewegbaren Zugstange.

Es sind Feinbohrwerkzeuge bekannt, die einen genormten Aufnahmeschaft zur Aufnahme in einer maschinenseitigen Aufnahmespindel von Aufnahmen in entsprechenden Schnittstellen von Werkzeugmaschinen aufweisen. Der Aufnahmeschaft weist üblicherweise einen Flansch zur definierten Anlage an die Aufnahme der Bearbeitungsvorrichtung auf.

Als eigentliches spanabhebendes Werkzeug wird eine Schneide verwendet, die in dem dem Aufnahmeschaft gegenüberliegenden Ende des Feinbohrwerkzeugs angeordnet und in einer Schneidenhalterung festgelegt ist.

Bei der Feinbearbeitung eines Loches, in der Regel eines Sackloches, ergeben sich beim Herausfahren des Werkzeugs aus dem Loch nach erfolgter Bearbeitung Riefen in der bearbeiteten Fläche, da die Schneide noch in Eingriff mit der bearbeiteten Fläche steht.

Weiterhin hat sich bei Untersuchungen ergeben, daß bei Werkzeugwechsel eine zufriedenstellende Wiederholgenauigkeit bei Kegelschaftwerkzeugen nicht gegeben ist und eine Werkzeugeinstellung in der Spindel im gespannten Zustand bei entsprechenden Anforderungen der Bearbeitungsgenauigkeit erforderlich ist.

Aus DE 16 52 790 A1 ist ein gattungsgemäßes Bohrungsbearbeitungswerkzeug zur Bearbeitung von zylindrischen Bohrungen bekannt, welches eine Anzahl von im stirnseitigen Endbereich des Werkzeugs angeordneten, radial auslenkbare Schneidplättchen aufweist. Zur Auslenkung dieser Schneidplättchen bzw. zum Schwenken entsprechender Schneidplättchenträger ist ein Konus vorgesehen, welcher vermittels einer Zugstange koaxial zur Achse des Bohrungswerkzeuges bewegbar ist. Ein maximaler Verstellweg der Zugstange ist über eine Exzenterschraube einstellbar, welche durch eine in der Zugstange ausgebildete radiale Langlochbohrung durchgeführt ist. Die Zugstange ist über einen koaxial in eine Arbeitsspindel der Werkzeugmaschine geführten Stößel bewegbar. Bei diesem herkömmlichen Bohrungsbearbeitungswerkzeug ist es möglich, während des Betriebs des Werkzeuges die einzelnen Schneidplättchen radial zu verstellen. So ist es beispielsweise möglich, die Schneiden zunächst in ihre radial äußerste Position zu drängen, und anschließend das Bohrungsbearbeitungswerkzeug zur Feinbearbeitung einer Bohrung in diese einzuführen. Nach Beendigung eines entsprechenden Feinbearbeitungsvorganges können die Schneiden radial nach innen zurückgezogen werden und ohne Beschädigung der Bohrungswandung aus der nunmehr fertig bearbeiteten Bohrung zurückgefahren werden. Ein derartiges Vorgehen hat sich als besonders vorteilhaft erwiesen, da es dadurch möglich wird, die Entstehung von Riefen in der feinbearbeiteten Bohrungsinnenfläche zu vermeiden.

Bei einem derartigen Bohrungsbearbeitungswerkzeug ist es jedoch erforderlich, daß die Werkzeugmaschine einen zur Auslenkung der Zugstange vorgesehenen Stößel und ferner eine Steuervorichtung zur zeitlichen Steuerung der Bewegung des Stößels aufweist.

Im Hinblick auf diesen zusätzlichen apparatetechnischen Aufwand liegt der Erfindung die Aufgabe zugrunde, ein Bohrungsbearbeitungswerkzeug zu schaffen, bei welchem eine radiale Verstellung der Schneidenposition auf einfachere Weise möglich wird.

Diese Aufgabe wird erfindungsgemäß durch ein Bohrungsbearbeitungswerkzeug gemäß Patentanspruch 1 gelöst.

Dadurch wird erreicht, daß die Schneide unmittelbar nach dem Arbeitsvorgang radial bewegt werden kann und somit außer Eingriff kommt mit der bearbeiteten Fläche, so daß das Werkzeug von dem Werkstück entfernt werden kann, ohne dieses zu berühren. Da die Betätigungseinrichtung auch die Zustellung der Schneide bewirkt, wird durch Einstellen der Betätigungseinrichtung mittels der Verstelleinrichtung erreicht, daß dieser Schneidenzustellweg exakt eingestellt werden kann, so daß eine entsprechende Bearbeitungsgenauigkeit wiederum erzielbar ist.

Dies ist besonders bei einer Bearbeitungsvorrichtung von Vorteil, bei der ein automatischer Werkzeugwechsel stattfindet.

Vorteilhafterweise weist die Betätigungseinrichtung einen axial in dem Werkzeug beweglichen Kolben auf, der mit Kühlmitteldruck entsprechend beaufschlagbar und zusammen mit einer Zugstange bewegbar ist. Weiterhin ist vorteilhafterweise eine Schneidenversetzeinrichtung vorgesehen, die bei Beaufschlagung durch die Zugstange die Schneide in radialer Richtung bewegt.

Die Betätigungseinrichtung ist weiterhin vorteilhafterweise so aufgebaut, daß der Kolben über eine in eine Gewindebuchse von der einen Seite eingreifende, mit dem Kolben verbundene Lagerwelle und über einen Gewindebolzen, der von der anderen Seite in die Gewindebuchse eingreift, mit der Zugstange verbunden ist.

Vorteilhafterweise ist die Verstelleinrichtung des Feinbohrwerkzeuges so ausgebildet, daß sie einen um die Achse des Aufnahmeschafts drehbaren Verstellring aufweist, dessen Drehung mittels einer Übertragungseinrichtung in eine zur Achse parallele translatorische Bewegung der Zugstange übertragen wird, wobei die Achse des Aufnahmeschafts mit der Drehachse einer maschinenseitigen Arbeitsspindel zusammenfällt. Hierbei wird auf besonders einfache Weise eine Verstellmöglichkeit erreicht.

Zum einfachen Übertragen einer Drehbewegung des Verstellrings weist dieser wenigstens einen nach innen vorspringenden Nocken auf, der in Eingriff bringbar ist mit einem Verstellrad, das mit der Gewindebuchse verbunden ist, die drehbar und zusammen mit dem Kolben axial bewegbar angeordnet ist.

Der in die Gewindebuchse eingreifende Gewindebolzen ist durch Drehung der Gewindebuchse in axiale Bewegung versetzbar, wodurch eine Drehung des Verstellrings auf einfache Weise in eine axiale Bewegung umgesetzt wird.

Wird dabei das Verstellgewinde der Gewindebuchse in seiner Steigung frei gewählt, so kann auf vorteilhafte Weise ein unterschiedlicher radialer Verstellweg erreicht werden, wodurch eine unterschiedliche bzw. variable Schneidenanhebung erzielt wird.

Das Verstellrad weist vorteilhafterweise eine Mehrzahl von Nocken auf, die in Eingriff bringbar sind mit dem Nocken des Verstellrings, so daß hierbei eine definierte und einfache Bewegungsübertragung möglich ist.

Bevorzugt weist das Verstellrad sechs Nocken auf, die regelmäßig im Umfang verteilt angeordnet sind, so daß einer vollen Umdrehung des Verstellrings eine Drehung des Vertstellrades von 1/6 oder 60^{o} entspricht.

Die Wahl der Anzahl der Nocken ist ebenfalls frei, so daß je nach notwendiger Feinabstimmung mehr oder weniger Nocken regelmäßig verteilt am Verstellrad vorgesehen werden können.

Zum einfachen Ergreifen des Verstellrings weist dieser an seinem Außenumfang wenigstens einen vorstehenden Zapfen oder Stift auf. Dieser dient dann zusätzlich als Markierung, damit die Bedienungsperson feststellen kann, wann sie eine Umdrehung des Verstellrings ausgeführt hat.

In der obenbeschriebenen bevorzugten Ausführungsform weist der Verstellring einen Nocken an seinem Innenumfang auf. Es kann aber auch eine Mehrzahl von Nocken, beispielsweise zwei oder drei, vorgesehen sein, so daß eine halbe oder eine Drittelumdrehung des Verstellrings zu einer Betätigung des Verstellrades führt, das heißt, daß das Verstellrad um einen Nocken weiterbewegt wird.

Vorteilhafterweise weist die Zugstange an ihrem dem Vorderende des Feinbohrwerkzeugs zugeordneten Ende eine Schräge auf, die in Eingriff steht mit der Schneidenversetzeinrichtung. Dies hat den Vorteil, daß über diese Schräge die Bewegung der Schneidenversetzeinrichtung gesteuert werden kann. Beim axialen Bewegen der Zugstange entlang der Schneidenversetzeinrichtung übt somit die Zugstange eine radiale Verschiebung der Schneidenversetzeinrichtung aus, wobei vorteilhafterweise je nach Neigung der Schräge ein entsprechend großer oder kleiner Versetzwert vorgewählt werden kann. Die Neigung entspricht einem mit der Drehachse des Werkzeugs eingeschlossenen Winkel, der frei wählbar ist.

Vorzugsweise wird eine Neigung der Schräge, d.h. ein Winkel von 2^{o} gegenüber der Werkzeugachse vorgesehen.

Um auf vorteilhafte Weise ein gutes Gleiten der Zugstange an der Schneidenversetzeinrichtung zu gewährleisten, weist diese vorteilhafterweise eine Kugel auf, die in Berührung mit der Zugstange kommt. Dabei kann die Kugel angeschliffen sein.

Vorteilhafterweise weist die Schneidenversetzeinrichtung weiterhin einen Torsionskurzklemmhalter auf, an dem die Schneide befestigt ist.

Zur schnellen Übertragung einer Antriebskraft bzw. Betätigungskraft auf die Betätigungseinrichtung erfolgt diese Betätigung mittels Kühlmitteldruck, der an dem in Werkzeugachsrichtung bewegbaren Kolben angreift. Das Feinbohrwerkzeug kann dabei so ausgelegt sein, daß eine an dem Kolben angreifende Federkraft durch den Kühlmitteldruck überwunden wird, so daß der Kolben sich in die der Fehlkraft entgegengesetzte Richtung bewegen kann. Die Schnelligkeit dieser Bewegung hängt somit von dem Druck bzw. Druckaufbau im Kühlmittel ab.

Weiterhin kann auf vorteilhafte Weise die Zufuhr des den Kolben beaufschlagenden Kühlmittels am Flansch erfolgen, indem entsprechende Kanäle ausgebildet sind.

Alternativ hierzu kann die Zufuhr des den Kolben beaufschlagenden Kühlmittels auch über eine zentrale Bohrung im Aufnahmeschaft erfolgen.

In einem einfachen Fall kann als Kühlmittel eine Flüssigkeit verwendet werden. Diese Flüssigkeit kann beispielsweise das bei der Bearbeitung notwendige Kühl- und/oder Schmiermittel sein.

Alternativ hierzu kann besonders umweltschonend auch Luft als Kühlmittel Verwendung finden.

In einer weiterhin vorteilhaften Ausgestaltung des erfindungsgemäßen Feinbohrwerkzeugs kann an dem Zapfen oder Stift des Verstellrings eine Betätigungseinrichtung zur Drehung des Verstellrings angreifen, so daß die Verstellung des Feinbohrwerkzeugs von außen steuerbar ist. Hierbei wird vorteilhafterweise ein mit dem Werkzeug verbundender Steuer- bzw. Regelkreis mit integrierter Meßstation verwendet, der bei festgelegtem Stift eine entsprechende Drehung der Arbeitsspindel hervorruft.

Dies führt dazu, daß eine Feineinstellung auf das genaueste durchgeführt werden kann, wobei durch die motorenbetriebene Verstellung auch eine entsprechend hohe Geschwindigkeit beim Verstellen erreicht wird.

Vorzugsweise kann die Betätigungseinrichtung auch bei drehender und nicht nur bei stehender Spindel erfolgen, was ein zuverlässiges und riefenfreies Zurückziehen des Werkzeugs ermöglicht.

Es besteht auch die einfache Möglichkeit einer manuellen Betätigung der Verstelleinrichtung.

Weitere Einzelheiten, Merkmale und Vorteile von Ausführungsbeispielen der Erfindung ergeben sich aus der nachfolgenden Beschreibung unter Bezugnahme auf die Zeichnung. Darin zeigt:
- Fig. 1: eine Schnittansicht auf eine Ausführungsform eines Ausführungsbeispiels des Feinbohrwerkzeugs; und
- Fig. 2: eine Schnittansicht gemäß der Linie II-II von Fig. 1.

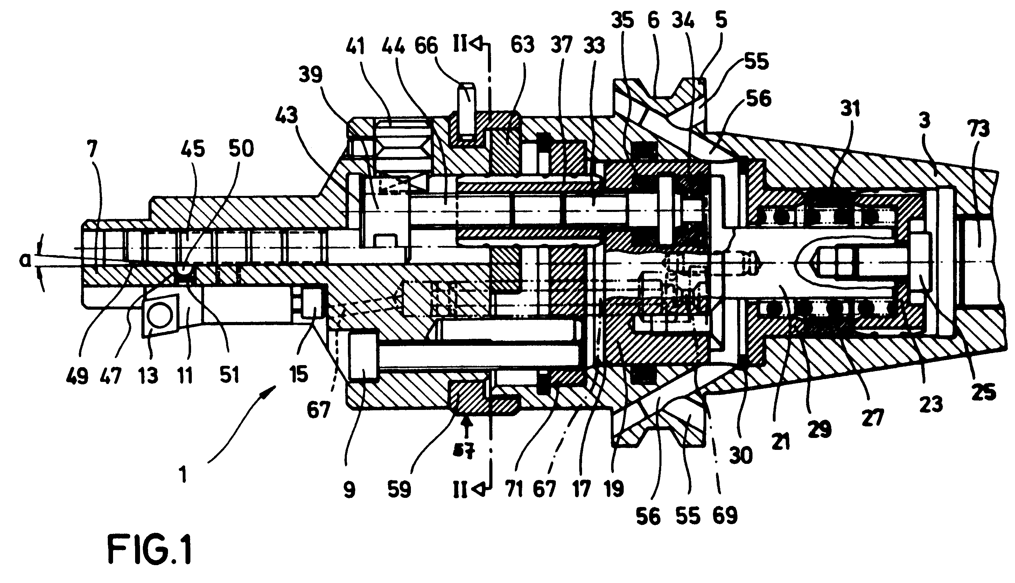

Fig. 1 zeigt ein Feinbohrwerkzeug 1 in Schnittansicht, mit einem Aufnahmeschaft 3, der vorzugsweise äußere genormte Abmessungen aufweist.

Der Aufnahmeschaft 3 ist aufgrund der Vereinfachung nicht ganz dargestellt. Er dient zur Aufnahme in eine entsprechende Werkzeugaufnahme einer Bearbeitungsvorrichtung und weist einen Flansch 5 auf, der in einem definierten Abstand zum Aufnahmeschaft 3 angeordnet ist, so daß eine definierte Anschlagposition des Feinbohrwerkzeugs in der Werkzeugaufnahme der Bearbeitungsvorrichtung gebildet wird.

Der Flansch 5 weist eine Ringnut 6 auf, die dazu dient, von an der Bearbeitungsvorrichtung vorgesehenen Greifereinrichtungen erfaßt zu werden, beispielsweise zum Durchführen eines automatischen Werkzeugwechsels.

Im Beispielsfalle ist der Flansch 5 einstückig mit dem Aufnahmeschaft 3 ausgebildet.

Das Feinbohrwerkzeug 1 weist weiterhin einen Schneidelement-Grundkörper 7 auf, der entfernbar an dem Aufnahmeschaft 3 mittels Schraubenbolzen 9 festgelegt ist.

Im Schneidelement-Grundkörper 7 ist ein Torsionskurzklemmhalter 11 vorgesehen, der eine Schneide 13 aufnimmt. Die Schneide 13 ist in Form einer Schneidplatte ausgebildet.

Die axiale Lage der Schneide 13 kann eingestellt werden mittels einer Schraube 15, um eine exakt eingestellte axiale Position der Schneide 13 sicherzustellen.

In Betrieb wird die Schneide radial mittels einer Betätigungseinrichtung abgehoben, wozu die Betätigungseinrichtung folgende Elemente aufweist.

In einer Bohrung 17, die in dem Feinbohrwerkzeug 1 ausgebildet ist, ist ein Kolben 19 vorgesehen, der gleitbeweglich in Axialrichtung ausgebildet ist. Der Kolben weist einen Ansatz 21 auf, der sich in Richtung des Aufnahmeschafts 3 und in diesen hinein erstreckt. Auf das Ende des Ansatzes 21 ist ein Anschlagring 23 mittels einer Schraube 25 lösbar aufgeschraubt und bildet einen Anschlag für eine Druckfeder 27. Zur Erzeugung des Druckes ist ein weiterer Anschlagring 29 vorgesehen, der in der Bohrung 17 mittels eines Sicherungsrings 30 axial festgelegt ist. Zwischen dem einen Anschlagring 23 und dem anderen Anschlagfring 29 ist weiterhin ein Distanzstück 31 angeordnet, mit dem je nach Breite eine entsprechende unterschiedliche Federkraft der Druckfeder 27 erzeugt werden kann.

Im Kolben 19 ist eine Lagerwelle 33 drehbar mittels entsprechendem Lager 34 gelagert. Die Lagerwelle weist weiterhin einen Flansch 35 auf, der eine axiale Festlegung der Lagerwelle 33 erzeugt. Die Lagerwelle 33 ist an ihrem freien Ende in eine Gewindebuchs 37 eingeschraubgt. Die Gewindebuchse 37 ist in Axialrichtung zusammen mit dem Kolben 19 bewegbar und kann sich jedoch um ihre Achse drehen.

Von der anderen Seite der Gewindebuchse 37 ist ein Gewindebolzen 39 eingeschraubt, der wiederum axial beweglich ist und an einer Drehung mittels einer Arretiereinrichtung 41 gehindert wird.

Der Gewindebolzen weist hierzu einen Bolzenkopf 43 auf, der in seinem Durchmesser größer ist als seine Gewindestange 44. Der Bolzenkopf 43 steht in Eingriff mit einer Zugstange 45, die sich in Axialrichtung durch den Schneidelement-Grundkörper 7 erstreckt und in Wirkverbindung steht mit einer Schneidenversetzeinrichtung 47.

An ihrem vorderen Ende weist die Zugstange einen abgeschrägten Bereich bzw. eine Schräge 49 auf, die um einen Winkel a gegenüber der Drehachse des Feinbohrwerkzeugs 1 geneigt ist. Aufgrund der Axialbewegung der Zugstange 45 wird die Schneidenversetzeinrichtung 47 in radialer Richtung bewegt, wobei die Schräge 49 an ihr vorbeigleitet.

Zum reibungsarmen Gleiten weist hierzu die Schneidenversetzeinrichtung 47 eine Kugel 50 auf, die in Eingriff steht mit einem Bolzen 51, der auf den Torsionskurzklemmhalter 11 drückt.

Der Winkel a der Schräge 49 kann frei gewählt werden, so daß entsprechende radiale Versetzwege der Schneidenversetzeinrichtung 47 gewählt werden können.

Zur axialen Bewegung der mit dem Kolben 19 verbundenen Zugstange 45 wird im Beispielsfalle eine Kühlmitteldruck an einer Seite 53 des Kolbens 19 angelegt. Hierzu sind Druckmittelkanäle 55 und 56 vorgesehen, die in Verbindung stehen mit einer entsprechenden Druckmittelquelle (nicht dargestellt), die vorteilhafterweise einen steuerbaren Kühlmitteldruck erzeugt.

Der Kühlmitteldruck bewirkt eine Überwindung der Federkraft der Druckfeder 27, so daß sich der Kolben 19 in Axialrichtung bewegen kann und damit die Druckstange 45 sich bewegt und so die Schneide 13 bzw. den Torsionskurzklemmhalter 11 in radialer Richtung bewegt und damit die Schneide abhebt.

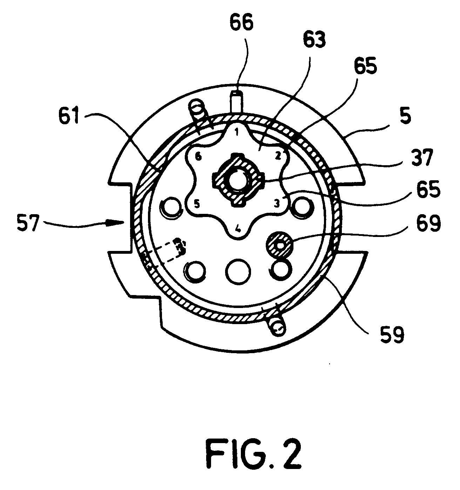

Wie sich bei Untersuchungen gezeigt hat, ist es notwendig, um eine exakte und wiederholte Feineinstellung des Feinbohrwerkzeugs sicherzustellen, daß die Lage der Zugstange 45, bezogen auf den Kolben 19, einstellbar ist. Hierzu weist das Feinbohrwerkzeug 1 eine Verstelleinrichtung 57 auf, die auch insbesondere in Fig. 2 dargestellt ist. Die Verstelleinrichtung 57 weist einen Verstellring 59 auf, der in Axialrichtung festgelegt drehbar um die Drehachse des Feinbohrwerkzeugs 1 angeordnet ist.

Wie aus Fig. 2 ersichtlich, weist der Verstellring 59 einen nach innen vorspringenden Nocken 61 auf, der in Eingriff bringbar ist mit einem Verstellrad 63. Das Verstellrad 63 steht über eine Keilnutverbindung in Eingriff mit der Gewindebuchse 37, so daß die Gewindebuchse 37 bezüglich des Verstellrades 63 axial bewegbar ist.

Das Verstellrad 63 weist weiterhin sechs Nocken 65 auf, die regelmäßig am Umfang verteilt am Verstellrad 63 angeordnet sind. Bei Drehung des Verstellrings 59 kommt der Nocken 61 in Eingriff mit einem der Nocken 65 des Verstellrades 63, und bewegt das Verstellrad mit.

Bei der Kombination von einem inneren Nocken 61 vom Verstellring 59 und sechs Nocken 65 am Verstellrad 63 ergibt sich, daß bei einer Umdrehung des Verstellrings 59, d.h. einer Umdrehung um 360^{o}, das Verstellrad 63 um 1/6 einer vollen Umdrehung, d.h. 60^{o}, gedreht wird.

Die Anzahl der Nocken 65 am Verstellrad ist jedoch nicht auf sechs Nocken festgelegt, sondern das Verstellrad 63 kann auch mehr oder weniger Nocken aufweisen, je nach Anforderung an die Feineinstellung des Feinbohrwerkzeugs. Weiterhin können auch mehrere innere Nocken 61 vorgesehen werden, so daß beispielsweise bei zwei Nocken nur eine halbe Umdrehung des Verstellrings 59 durchgeführt werden muß.

Zum Betätigen des Verstellrings 59 weist dieser einen nach außen vorspringenden Zapfen oder Stift 66 auf, der gleichzeitig auch als Markierung für die Lage des Verstellrings 53 dient.

Aus der vorhergehenden Beschreibung wird ersichtlich, daß bei Drehen des Verstellrings 59 zur Einstellung des Werkzeugs das Verstellrad 63 gedreht wird, das seinerseits die Gewindebuchse 37 dreht. Hierbei erfolgt eine Relativbewegung zwischen Gewindebuchse 37 und Gewindebolzen 39, da dieser am Drehen gehindert ist. Je nach Drehrichtung des Verstellrads 63 bewegt sich somit der Gewindebolzen 39 in die eine oder andere Richtung und bewegt somit gleichzeitig die Zugstange in die entsprechende Richtung.

In dem Kolben 19 ist weiterhin ein mit einem Überströmventil blockierbarer Kühlmittelkanal 67 vorgesehen, in den ab einem gewissen Druck durch Öffnen des Überströmventils 69 Kühlmittel eingespeist wird, wonach es in den Bereich der Schneide ausgegeben wird.

Der Funktionsablauf des Werkzeugs ergibt sich folgendermaßen.

In Ruhestellung des Werkzeugs liegen der Kolben 19 mit Lagerwelle 33, Gewindebuchse 37, Gewindebolzen 39 und Zugstange 45, aufgrund der Federkraft der Druckfeder 27 hinten an. Der Torsionskurzklemmhalter 11 befindet sich somit in eingezogener Schneidenposition. Durch Zuführung von Kühlmittel mit einem vorbestimmten Druck wird die Federrückstellkraft überbrückt und der Kolben 19 fährt aus. Der Kolbenverstellweg ist bei Montage des Werkzeugs über eine Abstimmscheibe 71 einstellbar. Durch die Bewegung des Kolbens, zusammen mit der Zugstange 45, wird somit die Schneide auf Bohrposition zugestellt.

Nach Bearbeitung wird der Kühlmitteldruck abgeschaltet und drucklos entlastet. Dadurch wird die Zugstange 45 über den Kolben 19 mittels Federrückstellkraft wieder in Ausgangsstellung gebracht. Die Schneide wird daraufhin vom Werkstück abgehoben. Im Eilrücklauf wird das Werkzeug 1 aus der Bohrung in die Ausgangsstellung zurückgefahren, ohne daß eine Berührung zwischen Schneide und Werkstückoberfläche erfolgt. Damit können sicher Riefen an der bearbeiteten Fläche verhindert werden.

Die Schneidenfeineinstellung mittels der Verstelleinrichtung 57 kann im dargestellten Beispielsfalle auf einfache Weise manuell durchgeführt werden.

Jedoch kann die Feineinstellung auch durch eine entsprechende automatische Vorrichtung erfolgen. Beispielsweise kann dies durch eine manuelle Eingabe an der Maschine über eine Tippsteuerung erfolgen. Die Feineinstellmöglichkeit kann automatisiert werden, indem die Bearbeitung eines Werkstücks in einen Steuer- und Regelkreis mit integrierter Meßstation eingebettet werden.

Somit wird auf einfache Weise ein Feinbohrwerkzeug geschaffen, bei dem ein riefenfreies Bearbeiten bei einer entsprechenden Bearbeitungsfläche sichergestellt wird und eine exakte Feineinstellung der Schneide im Werkzeughalter ermöglicht wird.

## Patentansprüche

1. Bohrungsbearbeitungswerkzeug (1) mit einem Aufnahmeabschnitt (3), einer Schneidenhalterung (11) zur Aufnahme einer Schneide (13), die in dem, dem Aufnabmeabschnitt (3) gegenüberliegenden Endbereich des Werkzeuges angeordnet ist, wobei die Schneide (13) mittels einer Betätigungseinrichtung in radialer Richtung bewegbar ist, und die Betätigungseinrichtung mittels einer Verstelleinrichtung (57) einstellbar ist, sowie einer axial in dem Werkzeug bewegbaren Zugstange (45), **dadurch gekennzeichnet**, daß die Bewegung der Schneide (13) mittels Kühlmitteldruck erfolgt, der an der mit der Zugstange (45) gekoppelten Kolbeneinrichtung angreift.

2. Bohrungsbearbeitungswerkzeug nach Anspruch 1, **dadurch gekennzeichnet**, daß ein Kolben (19) der Kolbeneinrichtung mit der Zugstange (45) über eine, in eine Gewindebuchse (37) von der einen Seite eingreifende, mit dem Kolben (19) verbundene Lagerwelle (33), und über einen Gewindebolzen (39), der von der anderen Seite in die Gewindebuchse (37) eingreift, verbunden ist.

3. Bohrungsbearbeitungswerkzeug nach Anspruch 1 oder 2, **dadurch gekennzeichnet**, daß die Verstelleinrichtung (57) einen um die Achse des Aufnahmeschafts drehbaren Verstellring (59) umfaßt, dessen Drehung mittels einer Übertragungseinrichtung in eine zur Achse parallele translatorische Bewegung der Zustange (45) übertragen wird, wobei die Achse des Aufnahmeschaftes (3) mit der Drehachse einer maschinenseitigen Arbeitsspindel zusammenfällt.

4. Bohrungsbearbeitungswerkzeug nach Anspruch 3, **dadurch gekennzeichnet**, daß der Verstellring (59) wenigstens einen nach innen vorspringenden Nocken (61) aufweist, der in Eingriff bringbar ist mit einem Verstellrad (63), das mit der Gewindebuchse (37) verbunden ist, die drehbar und axial zusammen mit dem Kolben (19) bewegbar angeordnet ist.

5. Bohrungsbearbeitungswerkzeug nach Anspruch 4, **dadurch gekennzeichnet**, daß der in die Gewindebuchse (37) eingreifende Gewindebolzen (39) durch Drehung der Gewindebuchse (37) in axiale Bewegung versetzbar ist.

6. Bohrungsbearbeitungswerkzeug nach einem der Ansprüche 2 bis 5, **dadurch gekennzeichnet**, daß das Verstellgewinde der Gewindebuchse (37) in seiner Steigerung frei wählbar ist.

7. Bohrungsbearbeitungswerkzeug nach einem der Ansprüche 4 bis 6, **dadurch gekennzeichnet**, daß das Verstellrad (63) eine Mehrzahl von Nocken (65) aufweist, die in Eingriff bringbar sind mit dem inneren Nocken (61) des Verstellringes (51).

8. Bohrungsbearbeitungswerkzeug nach Anspruch 7, **dadurch gekennzeichnet**, daß das Verstellrad (63) sechs Nocken (65) aufweist, die regelmäßig im Umfang verteilt angeordnet sind.

9. Bohrungsbearbeitungswerkzeug nach einem der Ansprüche 3 bis 8, **dadurch gekennzeichnet**, daß der Verstellring (59) an seinem Außenumfang wenigstens einen vorspringenden Zapfen oder Stift (66) aufweist.

10. Bohrungsbearbeitungswerkzeug nach einem der Ansprüche 1 bis 9, **dadurch gekennzeichnet**, daß die Zustange (45) anihrem dem vorderen Ende des Feinbohrwerkzeugs (1) zugeordneten Ende eine Schräge (49) aufweist, die in Eingriff steht mit der Schneidenversetzeinrichtung (47).

11. Bohrungsbearbeitungswerkzeug nach Anspruch 10, **dadurch gekennzeichnet**, daß die Schräge (49) einen Winkel (a) mit der Drehachse des Feinbohrwerkzeugs (1) einschließt, der frei wählbar ist.

12. Bohrungsbearbeitungswerkzeug nach Anspruch 11, **dadurch gekennzeichnet**, daß der Winkel (a) im wesentlichen 2° beträgt.

13. Bohrungsbearbeitungswerkzeug nach einem der Ansprüche 1 bis 12, **dadurch gekennzeichnet**, daß die Schneidenversetzeinrichtung (47) einen Drehkörper, insbesondere eine Kugel (50) unter Anlage an die Zugstange (45) aufweist.

14. Bohrungsbearbeitungswerkzeug nach Anspruch 13, **dadurch gekennzeichnet**, daß die Kugel (50) angeschliffen ist.

15. Bohrungsbearbeitungswerkzeug nach Anspruch 1, **dadurch gekennzeichnet**, daß die Zufuhr des den Kolben (19) beaufschlagbaren Kühlmittels bzw. Druckmittels am Flansch (5) erfolgt.

16. Bohrungsbearbeitungswerkzeug nach Anspruch 15, **dadurch gekennzeichnet**, daß die Zufuhr des den Kolben (19) beaufschlagbaren Druck- bzw. Kühlmittels über eine zentrale Bohrung (73) im Aufnahmeschaft (3) erfolgt.

17. Bohrungsbearbeitungswerkzeug nach einem der Ansprüche 1 bis 16, **dadurch gekennzeichnet**, daß als Kühlmittel eine Flüssigkeit verwendet wird.

18. Bohrungsbearbeitungswerkzeug nach einem der Ansprüche 1 bis 16, **dadurch gekennzeichnet**, daß als Kühlmittel Luft verwendet wird.

19. Bohrungsbearbeitungswerkzeug nach einem der Ansprüche 9 bis 18, **dadurch gekennzeichnet**, daß an dem Stift (66) des Verstellrings (59) eine Betätigungseinrichtung angreift.

20. Bohrungsbearbeitungswerkzeug nach einem der Ansprüche 1 bis 19, **dadurch gekennzeichnet**, daß die Feineinstellung durch einen mit dem Werkzeug (1) verbundenen Steuer- bzw. Regelkreis mit integrierter Meßstation erfolgt, der bei festgelegtem Stift (66) eine entsprechende Drehung der Arbeitsspindel hervorruft.

21. Bohrungsbearbeitungswerkzeug nach Ansprüchen 1 bis 18, **dadurch gekennzeichnet**, daß die Verstelleinrichtung (57) manuell betätigbar ist.

## Claims

1. Hole machining tool (1) having a receiving portion (3), a cutter holding means (11) for receiving a cutter (13) disposed in the end region of the tool opposite to the receiving portion (3), wherein the cutter (13) is movable in a radial direction by means of an actuating device and the actuating device is adjustable by means of an adjusting device (57), as well as having a connecting rod (45) movable axially in the tool, **characterized in** that the movement of the cutter (13) is effected by means of coolant pressure which acts upon the piston means coupled to the connecting rod (45).

2. Hole machining tool according to claim 1, **characterized in** that a piston (19) of the piston means is connected to the connecting rod (45) by a bearing shaft (33), which engages from one side into a threaded bush (37) and is connected to the piston (19), and by a threaded bolt (39) which engages from the other side into the threaded bush (37).

3. Hole machining tool according to claim 1 or 2, **characterized in** that the adjusting device (57) comprises an adjusting ring (59), which is rotatable about the axis of the receiving shaft and the rotation of which is translated by means of a translation device into a translatory movement of the connecting rod (45) parallel to the axis, the axis of the receiving shaft (3) coinciding with the axis of rotation of a machine-side workspindle.

4. Hole machining tool according to claim 3, **characterized in** that the adjusting ring (59) comprises at least one inwardly projecting cam (61) which may be brought into engagement with an adjusting wheel (63), which is connected to the threaded bush (37), which is disposed rotatably and axially movable together with the piston (19).

5. Hole machining tool according to claim 4, **characterized in** that the threaded bolt (39) engaging into the threaded bush (37) may be set in axial motion by rotation of the threaded bush (37).

6. Hole machining tool according to one of claims 2 to 5, **characterized in** that the lead of the adjusting thread of the threaded bush (37) is freely selectable.

7. Hole machining tool according to one of claims 4 to 6, **characterized in** that the adjusting wheel (63) has a plurality of cams (65) which may be brought into engagement with the inner cam (61) of the adjusting ring (51).

8. Hole machining tool according to claim 7, **characterized in** that the adjusting wheel (63) has six cams (65) which are arranged at regular intervals in the periphery.

9. Hole machining tool according to one of claims 3 to 8, **characterized in** that the adjusting ring (59) at its outer periphery has at least one projecting journal or pin (66).

10. Hole machining tool according to one of claims 1 to 9, **characterized in** that the connecting rod (45), at its end associated with the front end of the precision drilling tool (1), has a bevel (49) which is in engagement with the cutter displacement device (47).

11. Hole machining tool according to claim 10, **characterized in** that the bevel (49) with the axis of rotation of the precision drilling tool (1) forms an angle (a) which is freely selectable.

12. Hole machining tool according to claim 11, **characterized in** that the angle (a) is substantially 2°.

13. Hole machining tool according to one of claims 1 to 12, **characterized in** that the cutter displacement device (47) comprises a rotational body, in particular a ball (50) in contact with the connecting rod (45).

14. Hole machining tool according to claim 13, **characterized in** that the ball (50) is ground.

15. Hole machining tool according to claim 1, **characterized in** that supply of the coolant or pressure medium, which may act upon the piston (19), is effected at the flange (5).

16. Hole machining tool according to claim 15, **characterized in** that supply of the pressure medium or coolant, which may act upon the piston (19), is effected through a central bore (73) in the receiving shaft (3).

17. Hole machining tool according to one of claims 1 to 16, **characterized in** that a liquid is used as a coolant.

18. Hole machining tool according to one of claims 1 to 16, **characterized in** that air is used as a coolant.

19. Hole machining tool according to one of claims 9 to 18, **characterized in** that an actuating device acts upon the pin (66) of the adjusting ring (59).

20. Hole machining tool according to one of claims 1 to 19, **characterized in** that the precision adjustment is effected by means of a control or servo loop with integrated measuring station, which is connected to the tool (1) and, when the pin (66) is fixed, effects a corresponding rotation of the workspindle.

21. Hole machining tool according to claims 1 to 18, **characterized in** that the adjusting device (57) is manually operable.

## Revendications

1. Outil d'usinage et d'alésage (1) comportant une section de logement (3), un support de lame (11) pour le logement d'une lame (13), qui est disposée dans la zone terminale de l'outil située à l'opposé de la section de logement (3), la lame (13) pouvant être déplacée dans le sens radial au moyen d'un dispositif d'actionnement, et le dispositif d'actionnement étant réglable au moyen d'un dispositif de réglage (57), comportant aussi une tige de traction (45) pouvant être déplacée axialement dans l'outil, caractérisé en ce que le mouvement de la lame (13) se produit par pression de produit réfrigérant, appliquée sur le dispositif à piston couplé à la barre de traction (45).

2. Outil d'usinage et d'alésage selon la revendication 1, caractérisé en ce qu'un piston (19) du dispositif à piston est relié à la barre de traction (45) par l'intermédiaire d'un arbre d'appui (33) relié au piston (19), engrenant par l'un des côtés dans une douille taraudée (37), et par l'intermédiaire d'un bouton fileté (39), qui engrène par l'autre côté dans la douille taraudée (37).

3. Outil d'usinage et d'alésage selon la revendication 1 ou 2, caractérisé en ce que le dispositif de réglage (57) comprend un anneau de réglage (59) tournant autour de l'axe de la tige de logement, dont la rotation est transmise au moyen d'un dispositif de transmission en un mouvement de translation de la barre de traction (45), parallèle à l'axe, l'axe de l'arbre de logement (3) coïncidant avec l'axe de rotation d'un arbre moteur du côté de la machine.

4. Outil d'usinage et d'alésage selon la revendication 3, caractérisé en ce que l'anneau de réglage (59) présente au moins un bossage (61) faisant saillie vers l'intérieur, qui peut être mise en prise avec une roue de réglage (63), qui est reliée à la douille taraudée (37), qui est disposée en étant mobile de façon rotative et axiale avec le piston (19).

5. Outil d'usinage et d'alésage selon la revendication 4, caractérisé en ce que le boulon fileté (39) engrenant dans la douille taraudée (37) est déplaçable selon un mouvement axial par rotation de la douille taraudée (37).

6. Outil d'usinage et d'alésage selon l'une des revendications 2 à 5, caractérisé en ce que le filet de réglage de la douille taraudée (37) peut être choisi librement quant à son élévation.

7. Outil d'usinage et d'alésage selon l'une des revendications 4 à 6, caractérisé en ce que la roue de réglage (63) présente une pluralité de bossages (65), pouvant être mis en prise avec le bossage intérieur (61) de l'anneau de réglage (51).

8. Outil d'usinage et d'alésage selon la revendication 7, caractérisé en ce que la roue de réglage (63) présente six bossages (65), qui sont disposés en étant répartis régulièrement sur le pourtour.

9. Outil d'usinage et d'alésage selon l'une des revendications 3 à 8, caractérisé en ce que l'anneau de réglage (59) présente sur son pourtour extérieur au moins un tourillon ou une cheville (66) faisant saillie.

10. Outil d'usinage et d'alésage selon l'une des revendications 1 à 9, caractérisé en ce que la barre de traction (45) présente, à son extrémité associée à l'extrémité avant de l'outil à pointer (1), un biseau (49) qui se trouve en prise avec le dispositif de déplacement de la lame (47).

11. Outil d'usinage et d'alésage selon la revendication 10, caractérisé en ce que le biseau (49) forme un angle (a), choisi librement, avec l'axe de rotation de l'outil à pointer (1).

12. Outil d'usinage et d'alésage selon la revendication 11, caractérisé en ce que l'angle (a) est de 2° sensiblement.

13. Outil d'usinage et d'alésage selon l'une des revendications 1 à 12, caractérisé en ce que le dispositif de déplacement de la lame (47) présente un corps de rotation, notamment une boule (50) appuyée sur la barre de traction (45).

14. Outil d'usinage et d'alésage selon la revendication 13, caractérisé en ce que la boule (50) est tronquée.

15. Outil d'usinage et d'alésage selon la revendication 1, caractérisé en ce que l'amenée de l'agent réfrigérant ou de l'agent de pression applicable au piston se fait au niveau de la bride (5).

16. Outil d'usinage et d'alésage selon la revendication 15, caractérisé en ce que l'amenée de l'agent de pression ou de l'agent réfrigérant se fait par un alésage central (73) situé dans la tige de logement (3).

17. Outil d'usinage et d'alésage selon l'une des revendications 1 à 16, caractérisé en ce qu'un liquide est utilisé comme agent réfrigérant.

18. Outil d'usinage et d'alésage selon l'une des revendications 1 à 16, caractérisé en ce que l'air est utilisé comme agent réfrigérant.

19. Outil d'usinage et d'alésage selon l'une des revendications 9 à 18, caractérisé en ce qu'un dispositif d'actionnement agit sur la tige (66) de l'anneau de réglage (59).

20. Outil d'usinage et d'alésage selon l'une des revendications 1 à 19, caractérisé en ce que le réglage précis est réalisé par un circuit de commande ou de réglage, avec poste de mesure intégré, relié à l'outil (1), qui, avec une cheville fixée (66), engendre une rotation correspondante de l'arbre moteur.

21. Outil d'usinage et d'alésage selon les revendications 1 à 18, caractérisé en ce que le dispositif de réglage (57) peut être actionné manuellement.
